# EUROPEAN PATENT SPECIFICATION

(11) **EP 1 444 035 B1**
(45) Date of publication and mention of the grant of the patent: **07.07.2010**
(21) Application number: 01989743.8
(22) Date of filing: 06.11.2001
(51) Int. Cl.: B01J 19/18, B01J 8/00, C08F 6/00

(54) **CONTINUOUS REMOVAL OF POLYMERIZATION SLURRY**
KONTINUIERLICHES ENTFERNEN VON SUSPENSION AUS POLYMERISATIONSVERFAHREN
EVACUATION EN CONTINU D'UNE SUSPENSION DE POLYMERISATION

(43) Date of publication of application: 11.08.2004
(73) Proprietor: CHEVRON PHILLIPS CHEMICAL COMPANY LP, The Woodlands, TX 77380 (US)
(72) Inventor: KENDRICK, James, A., Baton Rouge, LA 70818 (US); TOWLES, Thomas, W., Baton Rouge, LA 70806 (US); ROGER, Scott, T., Baton Rouge, LA 70820 (US); DEPIERRI, Robert, G., Baton Rouge, LO 70817-1206 (US)
(74) Representative: Denness, James Edward
(86) International application number: PCT/US2001/043708
(87) International publication number: WO 2003/039739

(56) References cited:
- EP-A- 0 891 990
- WO-A-01/05842
- US-A- 1 693 786
- US-A- 3 203 766
- US-A- 3 293 000

## Description

### FIELD OF INVENTION

The present invention relates to a process for continuously separating polymer solids from a liquid medium comprising an inert diluent and unreacted monomers in a slurry polymerization process.

### BACKGROUND OF THE INVENTION

In many polymerization processes for the production of polymer, a polymerization effluent is formed which is a slurry of particulate polymer solids suspended in a liquid medium, ordinarily the reaction diluent and unreacted monomers. A typical example of such processes is disclosed in Hogan and Bank's U.S. Pat. No. 2,825,721. While the polymerization processes described in the Hogan document employs a catalyst comprising chromium oxide and a support, the present invention is applicable to any process producing an effluent comprising a slurry of particulate polymer solids suspended in a liquid medium comprising a diluent and unreacted monomer. Such reaction processes include those which have come to be known in the art as particle form polymerizations.

In most commercial scale operations, it is desirable to separate the polymer and the liquid medium comprising an inert diluent and unreacted monomers in such a manner that the liquid medium is not exposed to contamination so that the liquid medium can be recycled to the polymerization zone with minimal if any pudfication. A particularly favored technique that has been used heretofore is that disclosed in the Scoggin et al, U.S. Pat. No. 3,152,872, more particularly the embodiment illustrated in conjunction with Fig. 2 of that patent. In such processes the reaction diluent, dissolved monomers, and catalyst an circulated in a loop reactor wherein the pressure of the polymerization reaction is about 100 to 700 psia. The produced solid polymer is also circulated in the reactor. A slurry of polymer and the liquid medium is collected in one or more settling legs of the slurry loop reactor from which the slurry is periodically discharged to a flash chamber wherein the mixture is flashed to a low pressure such as about 20 psia. While the flashing results in substantially complete removal of the liquid medium from the polymer, it is necessary to recompress the vaporized polymerization diluent (i.e., isobutane) in order to condense the recovered diluent to a liquid form suitable for recycling as liquid diluent to the polymerization zone. The cost of compression equipment and the utilities required for its operation often amounts to a significant portion of the expense involved in producing polymer.

Some polymerization processes distill the liquefied diluent prior to recycling to the reactor. The purpose of distillation is removal of monomers and light-end contaminants. The distilled liquid diluent is then passed through a treater bed to remove catalyst poisons and then on to the reactor. The equipment and utilities costs for distillation and treatment can be a significant portion of the cost of producing the polymer.

In a commercial scale operation, it is desirable to liquefy the diluent vapors at minimum cost. One such technique used heretofore is disclosed in Hanson and Sherk's U.S. Pat No. 4,424,341 in which an intermediate pressure flash step removes a significant portion of the diluent at such a temperature and at such a pressure that this flashed portion of diluent may be liquified by heat exchange instead of by a more costly compression procedure.

EP-A-0891990 discloses an olefin polymerization process conducted in a loop reactor, wherein slurry having a high concentration in solids is continuously withdrawn from said loop reactor by means of elongated hollow appendages.

### BRIEF SUMMARY OF THE INVENTION

The present invention relates to a process for capturing a higher weight percentage of polymer solids from a circulating slurry in a loop reactor than the weight percentage of solids in the circulating slurry. The invention uses a slurry loop polymerisation reactor containing a flow of polymerisation slurry therein comprising: a discharge conduit extending a distance into the loop reactor; the conduit having a longitudinal axis and an opening inside the loop reactor; wherein the opening is located closer to the outside wall of the loop reactor than to the inside wall of the loop reactor at least a portion of the conduit being curved along its longitudinal axis inside the loop reactor; and the opening substantially facing the flow of the slurry. Additionally, a portion of the conduit may extend outwardly from the loop reactor for discharging, continuously or otherwise the polymer solids from the loop reactor.

The process includes the step of discharging, continuous or otherwise, the polymer solids from the loop reactor through a portion of the conduit extending outwardly from the loop reactor.

In one embodiment, the discharge conduit is located within a curved portion of the loop reactor. In another embodiment, the curved portion of the loop reactor comprises a lower leg of the loop reactor. Preferably, the discharge conduit is located within a middle portion of the curved portion of the loop reactor. Even more preferably, the discharge conduit is located substantially at the middle of the curved portion of the loop reactor. In another preferred embodiment in accordance with the present invention, the curved portion comprises a 20 to 270 degree bend, preferably a 80 to 200 degree bend, more preferably a 90 to 180 degree bend, and most preferably a 180 degree bend.

The opening of the discharge conduit is located inside the loop reactor at a point where the concentration of solids of the slurry is higher than the average concentration of solids in the slurry in the loop reactor. The opening is located closer to the outside wall of the loop reactor than to the inside wall of the loop reactor. More preferably, the opening is located closer to an outside wall of the loop reactor than to the center of the loop reactor. Even more preferably, the opening is closely adjacent to the outside wall of the loop reactor. Most preferably, the opening touches the outside wall of the loop reactor. In yet another preferred embodiment, the discharge conduit is curved along its longitudinal axis from about 45 degrees to about 135 degrees, preferably from about 75 degrees to about 135 degrees. In another embodiment, the face of the opening defines a plane which intersects an outside wall of the loop reactor at a tangent line which is substantially perpendicular to the plane. In yet another embodiment, the discharge conduit has a diameter which is about 5-40% of the inside diameter of the loop reactor, preferably about 7-25%, and more preferably about 8-15%.

Of course, the invention can also include various combinations of the embodiments disclosed herein.

An object of the invention is to eliminate the need for a settling leg on the slurry reactor and the intermittent high pressure pulse in the slurry reactor caused by periodic discharging of the contents of the settling leg. Another object of the present invention is to improve safety by eliminating the possibility of plugging in a settling leg.

Another object of the invention is to eliminate plugging in equipment downstream from the discharge valve. In a settling leg of a polymerization reactor polymerization continues and the heat of reaction further heats the liquid medium and a potential exists for some of the polymer solids to dissolve or to fuse together. As the contents of the settling leg exit the discharge valve, the pressure drop causes flashing of some of the liquid medium which results in cooling the remaining liquid medium causing the dissolved polymer to precipitate which tends to plug downstream equipment. The present invention which eliminates the need for a settling leg also eliminates this potential for downstream equipment plugging by avoiding the initial dissolution or fusion of the polymer solids.

Another object of the present invention is to increase the reactor throughput by the use of continuous discharge and increased ethylene concentrations in the liquid medium, e.g., greater than or equal to 4 weight percent at reactor outlet, desirably from 4 weight percent to 8 weight percent, still more desirably from 5 weight percent to 7 weight percent Settling legs limit ethylene concentrations due to an increased tendency to plug downstream equipment caused by accelerated reaction within the settling leg. A continuous polymerization effluent slurry flow allows ethylene concentrations to be limited only by the ethylene solubility in the liquid diluent in the reactor, thereby increasing the specific reaction rate for polymerization and increasing reactor throughput.

Another object of the present invention is to increase the weight percent (wt %) of polymer solids in the polymerization slurry circulating in the polymerization zone in the loop reactor. Desirably, the wt % of polymer solids in the polymerization slurry is greater than 45, more desirably, from 45 to 65, still more desirably from 50 to 65, and most desirably from 55 to 65.

Another object of the present invention is to increase the space time yield (STY), expressed in terms of pounds per hour-gallon (Ibs/hr-gal). Desirably, the STY is greater than 2.6, more desirably from 2.6 to 4.0, and most desirably from 3.3 to 4.0.

Other aspects, objects, and advantages of the present invention will be apparent from the following disclosure and the Figures.

### BRIEF DESCRIPTION OF THE DRAWING

Fig. 1 is a schematic diagram illustrating an apparatus for continuously separating polymer solids from diluent and unreacted monomer in accordance with the present invention.
Fig. 2 is an enlarged, cross sectional view of the curved discharge conduit with opening extending a distance into the loop reactor and the circulating polymerization slurry.
Fig. 3 is a schematic view of a loop reactor having top and bottom legs having a generally 180 degree bend and a discharge conduit located in a bottom portion of bend.
Fig. 4 is a transverse cross sectional view of a bottom section of loop reactor taken generally along line 7-7 of Fig. 3.

### DETAILED DESCRIPTION OF THE INVENTION

As used herein, the term "polymerization slurry" means substantially a two phase composition including polymer solids and liquid circulating within the loop reactor. The solids include catalyst and a polymerized olefin, such as polyethylene. The liquids include an inert diluent, such as isobutane, with dissolved monomer, comonomer, molecular weight control agents, such as hydrogen, antistatic agents, antifouling agents, scavengers, and other process additives.

As used herein, the term "space time yield" (STY) means the production rate of polymer per unit of loop reactor volume or polymerization slurry volume.

As used herein, the term "catalyst productivity" means weight of polymer produced per weight of catalyst introduced into the loop reactor.

As used herein, the term "polymer residence time" means the average duration that a polymer particle remains within the loop reactor.

The present invention is applicable to any mixture which comprises a slurry of polymer solids and a liquid medium comprising an inert diluent and unreacted polymerizable monomers including slurries resulting from olefin polymerization. The olefin monomers generally employed in such reactions desirably include 1-olefins having from 2 up to 8 carbon atoms per molecule. Typical examples include ethylene, propylene, butene, pentene, hexene and octene. Other examples include vinyl aromatic monomers, like styrene and alkylsubstituted styrene, geminally distributed monomers such as isobutylene and cyclic olefins, such as norbornene and vinyl norbornene. Typical diluents employed in such olefin polymerizations include saturated aliphatic hydrocarbons having 3 to 8, preferably 3 to 4 carbon atoms per molecule, such as propane, isobutane, propylene, n-butane, n-pentane isopentane, n-hexane, isooctane, and the like. Of these diluents those of 3 to 4 carbon atoms per molecule are preferred, and isobutane is most preferred.

The rate of discharge of the polymerization effluent is such as to allow a continuous process stream from the slurry loop reactor from the point of discharge of the liquified polymerization effluent through a single point discharge valve and also through the first flash tank and the associated vapor recovery and solids recovery systems. The rate of discharge of the polymerization effluent is such as to maintain a constant pressure in the slurry reactor and to eliminate intermittent high pressure pulses associated with a discharge of a portion of the reactor contents that occurs with settling legs on slurry reactors.

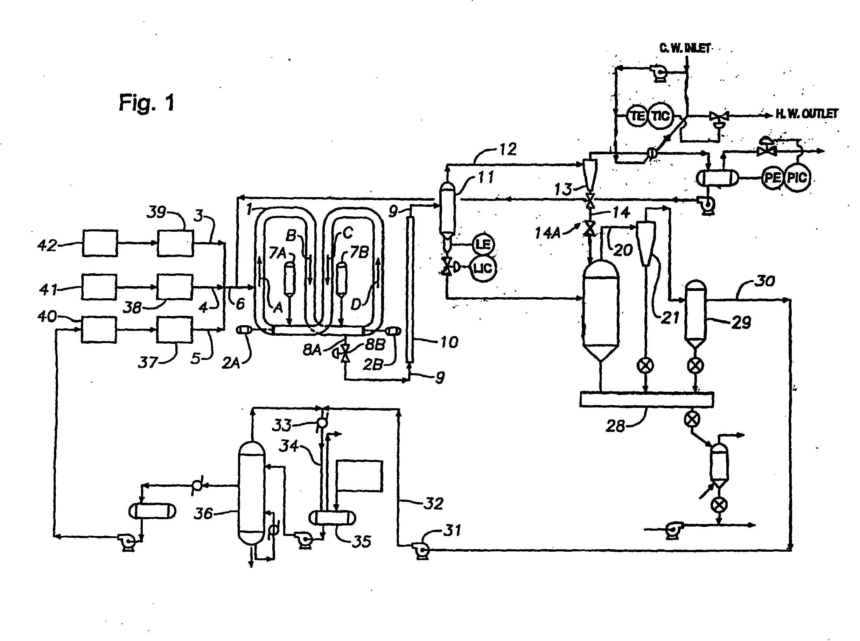

A further understanding of the present invention will be provided by referring to Fig. 1 which illustrates a system used in an embodiment of the invention.

In the embodiment illustrated in Fig. 1, the polymerization is carried out in a loop reactor 1. It will be understood that while the loop reactor 1 is illustrated with four vertical legs, the loop reactor 1 may be equipped with more legs, desirably eight or more legs, desirable between 8 and 20, more desirable between 8 and 16, most desirable with 12 legs. The polymerization slurry is directionally circulated throughout the loop reactor 1 as illustrated by arrows A-D by one or more pumps, such as axial flow pumps, 2A and 2B. Desirably, the loop reactor 1 is equipped with multiple pumps wherein each pump is dedicated to an even number of legs, such as for example, four legs, six legs, eight legs, etc. Diluent comonomer and monomer are introduced into the loop reactor 1 from the diluent storage vessel 40, the comonomer storage vessel 41, and the monomer source 42 through their respective treater beds 37, 38, and 39 through conduits 5, 4 and 3, respectively, connected to conduit 6. Catalyst is added to the loop reactor 1 through one or more catalyst feed systems 7A and 7B.. Normally, catalyst is introduced in a hydrocarbon diluent.

Polymerization slurry may be removed from the loop reactor by continuous discharge through a discharge conduit 8A. It will be understood that the loop reactor 1 may be equipped with one or more discharge conduits 8A. It will be also understood that the discharge conduit(s) 8A may be operated in a continuous or discontinuous mode, but desirably a continuous mode. The discharge conduit 8A extends for a distance through a portion of the wall of the loop reactor 1 and into the circulating polymerization slurry. By extending for a distance into the polymerization slurry, the discharge conduit 8A may remove polymerization effluent from the circulating polymerization slurry over an area defined from near or adjacent the inside wall of the loop reactor 1 to a distance extending into the circulating polymerization slurry. In this way, a higher weight percentage of polymer solids may be formed within the conduit 8A and ultimately removed from the loop reactor 1 than the weight percentage of polymer solids within the otherwise circulating polymerization slurry.

The polymerization effluent passes from the discharge conduit 8A to the discharge valve 8B to a conduit 9 which is provided with a line heater 10 and into the first flash tank 11 which separate vaporized liquid medium from polymer slurry/solids. Conduit 9 has an indirect heat exchange means such as a flash line heater 10.

Vaporized liquid medium comprising diluent and unreacted monomers exit the first flash tank 11 via transfer conduit 12 through which it is passed into a separator, such as a cyclone, illustrated by reference number 13 which separates entrained polymer solids from the vapor. Polymer solids separated by the cyclone 13 are passed via conduit 14 through a dual valving assembly 14A designed to maintain a pressure seal below cyclone 13 to a lower pressure second flash tank 15.

The polymer solids in the lower pressure second flash tank 15 are passed via a conduit 27 to a conventional dryer 28. The vapor exiting the secondary cyclone 21, after filtration in a filter unit 29, is passed by a conduit 30 to a compressor 31, and the compressed vapors are passed through a conduit 32 to a condenser 33 where vapor is condensed and the condensate is passed through conduit 34 to storage vessel 35, The condensed liquid medium in the storage vessel 35 is typically vented overhead for removal of light-end contaminants. The inert diluent can be returned to the process through a treater bed 37 to remove catalyst poisons or distilled in unit 36 for more complete removal of light-ends and then returned to the process through a treater bed.

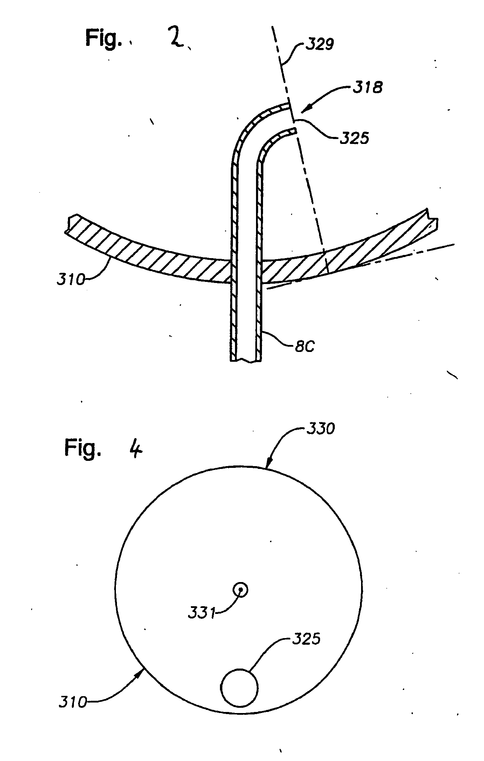

Fig 2 shows an embodiment in accordance with the present invention. In this embodiment, discharge conduit 8C extends through a portion, preferably a lower portion, of a wall 310 of the loop reactor 1. Wall 310 is part of the outside wall of the loop reactor (Fig 4). As used herein, "outside wall" means that portion of the reactor wall towards which the solids in the loop reactor slurry tend to flow, by centrifugal force, when the slurry travels through a bend in the loop reactor. As shown in Fig. 4, the illustrated "outside wall" is the lower portion 310 of the reactor wall. At least a portion of the discharge conduit 8C is curved along its longitudinal axis inside the loop reactor. Without wishing to be bound by theory, it is believed that this avoids or substantially reduces turbulence of the circulating polymerization slurry flow once it enters the discharge conduit The opening 325, preferably, located at the end of the curved conduit inside the loop reactor is substantially facing the flow of the circulating slurry 318. In a preferred embodiment in accordance with the present invention, the discharge conduit is located within a middle portion of the curved portion of the loop reactor, more preferably substantially at the middle of the curved portion, most preferably in a lower leg of the reactor.

In a preferred embodiment in accordance with the present invention, the curved portion 310 of the loop reactor comprises a 20 to 270 degree bend, preferably a 80 to 200 degree bend, more preferably a 90 to 180 degree bend, and most preferably a 180 degree bend.

Although the ranges herein are given as a list of upper preferable values and lower preferable values, this is to be understood as specifically disclosing all ranges formed from any pair of an upper preferred value and a lower preferred value, regardless whether ranges are separately disclosed For instance, the preferred bend can be 80 to 180 degree bend.

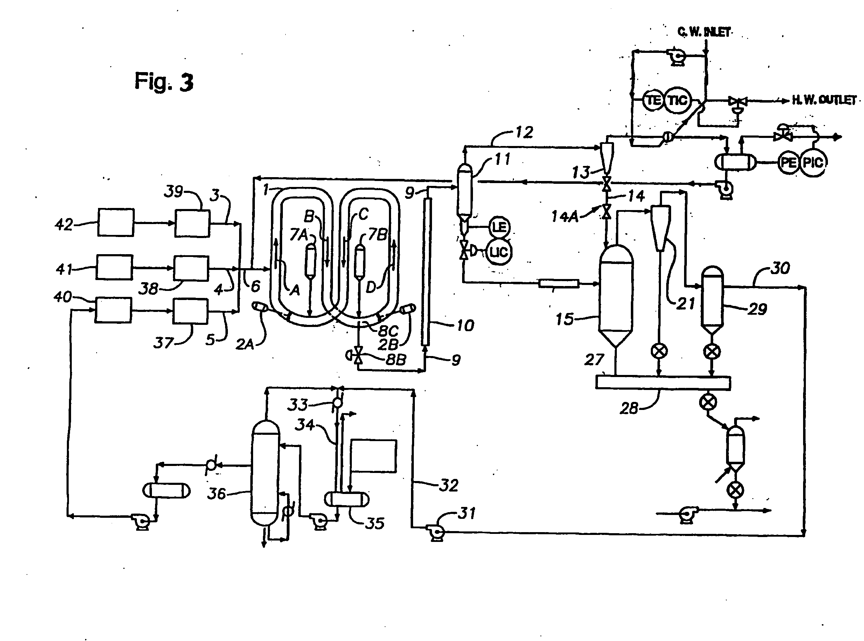

In another preferred embodiment, the discharge conduit 8C is located substantially at the bottom of a 180 degree bend of the loop reactor 1. Such an embodiment is illustrated schematically in Figure 3. In this embodiment at least one bottom leg 328 of the reactor has a bend of about 180 degrees. In other words, instead of being a substantially straight section located between.two 90 degree bends, the lower leg of the loop reactor is substantially "U" shaped. In this embodiment, discharge conduit 8C is preferably located substantially in a central portion of generally U shaped bottom leg 328 and extends through the bottom wall 310 of the reactor 1. In this embodiment, the opening 325 is located inside the loop reactor in any position but preferably close to the outside wall in the lower leg of the loop reactor so as to capture a higher concentration of solids than the average concentration of solids in the loop reactor. Without wishing to be bound by the theory, it is believed that the centrifugal force of the circulating flow cause a higher concentration of solids in the lower portion of the cross-section of the lower leg. For example, in one embodiment, the average concentration of solids in the loop reactor is about 55 wt.% and the captured solids concentration is above 57 wt.%, preferably above 60 wt.%, more preferably above 65 wt.%. In one embodiment as illustrated schematically in Fig. 4, the opening 325 is located closer to the outside wall 310 of the loop reactor than to the inside wall 330 of the loop reactor. Preferably, the opening is located closer to the outside wall. 310 of the loop reactor than to the center 331 of the loop reactor. More preferably, the opening is closely adjacent to the outside wall of the loop reactor. Most preferably, the opening touches the outside wall of the loop reactor.

The section of the discharge conduit 8C inside the loop reactor is bent in a curve towards the flow of the slurry 318 of the loop reactor. The discharge conduit has a diameter less than that of the loop reactor legs to avoid interference with the flow of the polymerization slurry circulation inside the loop reactor. Preferably, the discharge conduit has a diameter 5-40% of the diameter of loop reactor, more preferably 7-25%, and most preferably 8-15%. The diameter of the loop reactor is measured in the immediate area of the opening of the discharge conduit In one example, the discharge conduit is a pipe haying a substantially circular transverse cross section of about 2-inch diameter while the diameter of the loop reactor in the immediate area is about 20 inches.

The discharge conduit 8C is curved substantially towards the flow of the circulating slurry. Preferably, the curve is from about 45 degrees to about 135 degrees. More preferably, the curve is from about 75 degrees to about 135 degrees, In one embodiment, as illustrated schematically in Fig. 2, the face of the opening at the end of the discharge conduit defines a plane 329 which intersects an outside wall of the loop reactor at a tangent line which is substantially perpendicular to the plane.

It has been observed that by increasing the head and flow capability of the loop reactor circulating pump(s), higher weight percent solids can be circulated in the reactor. It has also been observed that attaining the necessary head and flow from one pump is increasingly difficult as percent solids are increased above 45 weight percent and/or reactor length is increased. Therefore, the use of two pumps in series allows a doubling of pumping head capability and a resulting percent solids increase. Increased weight percent solids in the loop reactor increases catalyst residence time, which for chrome oxide and Ziegler-Natta catalysts, increases catalyst productivity. One can choose to take advantage of higher percent solids and longer residence time by keeping production rate constant at reduced catalyst feed rate and improve the catalyst yield. Another alternative is to maintain catalyst feed rate constant and increase the reactor throughput and therefor increase STY at nearly constant catalyst productivity. Higher solids also increases the weight percent solids removed from the reactor which reduces isobutane processing cost in recycle equipment. Desirably, the higher solids are removed continuously. Continuous discharge may occur through a single point discharge line.

In a loop reactor, it is not always possible to locate the continuous discharge line in an optimal location to take advantage of centrifugal force to increase the weight percent solids and therefore reduce the amount of isobutane entrained with the polymer solids. It has been observed that a specifically designed pipe inserted into the loop reactor can increase weight percent solids removed from the reactor. This pipe insert will function in any section of the loop reactor and in a straight section will increase the weight percent solids to that equal to that in a location which takes advantage of centrifugal force to concentrate solids.

With the development of high weight percent solids circulation capability in the loop reactor and two-stage flash, the need to concentrate solids in the reactor discharge is reduced compared to the conventional loop reactor operations having low solids circulation, single-stage flash, continuous discharge line, and continuous discharge or otherwise. Therefore, the conventional loop reactor settling legs, which are designed to maximize polymer solids concentration prior to discharge, can be replaced with a continuous discharge line, which simplifies the system mechanically, reduces capital cost, improves safety, reduces maintenance and improves reactor control. Settling legs require routine maintenance due to their plugging tendency and can form material which plugs downstream polymer handling equipment. Maximum loop reactor ethylene concentration is limited by settling legs due to the tendency for polymer to grow in the legs at elevated ethylene concentrations between discharges and therefore plug the leg. Continuous discharge eliminates this tendency. Another advantage of continuous discharge is better response to a sudden drop in reactor pressure, which can happen if ethylene flow is quickly reduced. Under this condition, settling legs will stop discharging and can plug with polymer within minutes.

## Claims

1. A process for capturing a higher weight percentage of polymer solids from a circulating slurry in a loop reactor than the weight percentage of polymer solids in the circulating slurry, the process being carried out in a slurry loop polymerisation reactor which contains a flow of polymerisation slurry therein, and which comprises:
a discharge conduit extending a distance into the loop reactor;
the conduit having a longitudinal axis and an opening inside the loop reactor wherein the opening is located closer to the outside wall of the loop reactor than to the inside wall of the loop reactor;
at least a portion of the conduit being curved along its longitudinal axis inside the loop reactor; and
the opening substantially facing the flow of the slurry,
and the process comprising the step of discharging polymer solids from the loop reactor through a portion of the conduit extending outwardly from the loop reactor.

2. The process according to claim 1, wherein the discharge conduit is located within a curved portion of the loop reactor, preferably a lower leg of the loop reactor.

3. The process according to claim 2, wherein the discharge conduit is located within a middle portion of the curved portion of the loop reactor and preferably is located substantially at the middle of the curved portion of the loop reactor.

4. The process according to claim 2 or claim 3, wherein the curved portion comprises a 20 to 270 degree bend, preferably an 80 to 200 degree bend and especially a 90 to 180 degree bend.

5. The process according to any of claims 2 to 4, wherein the curved portion comprises a 180 degree bend.

6. The process according to claim 1, wherein the discharge conduit is curved along its longitudinal axis from 45 degrees to 135 degrees, preferably from 75 degrees to 135 degrees.

7. The process according to any of claims 1 to 5, wherein the face of the opening defines a plane which intersects an outside wall of the loop reactor at a tangent line which is substantially perpendicular to the plane.

8. The process according to any of claims 1 to 3, wherein the discharge conduit has a diameter which is 5-40% of the inside diameter of the loop reactor, preferably 7-25% of the inside diameter of the loop reactor and especially 8-15% of the inside diameter of the loop reactor.

9. The process according to claim 1 wherein the opening is located closer to an outside wall of the loop reactor than to the center of the loop reactor.

10. The process according to claim 9, wherein the opening is closely adjacent to the outside wall of the loop reactor and preferably touches the outside wall of the loop reactor.

11. The process according to Claim 1 wherein
the discharge conduit is located substantially at the middle of a curved portion of the loop reactor;
the curved portion of the loop reactor comprises a lower leg of the loop reactor;
the curved portion of the loop reactor comprises a 180 degree bend;
the discharge conduit is curved along its longitudinal axis more than about 75 degrees but less than about 135 degrees;
the face of the opening defines a plane which intersects an outside wall of the loop reactor at a tangent line being substantially perpendicular to the plane;
the discharge conduit has a diameter which is about 8-15% of the inside diameter of the loop reactor; and
the opening is closer to the outside half wall than the center line of the loop reactor.

## Patentansprüche

1. Ein Verfahren zum Einfangen eines höheren Gewichtsprozentsatzes von polymeren Feststoffen aus einer zirkulierenden Suspension in einem Schlaufenreaktor als der Gewichtsprozentsatz von polymeren Feststoffen in der zirkulierenden Suspension, wobei das Verfahren in einem Schlaufenreaktor für Suspensionspolymerisation durchgeführt wird, der einen Strom einer Polymerisationssuspension darin einschließt und der folgendes umfasst:
eine Abgabeleitung, die sich mit einem Abstand in den Schlaufenreaktor erstreckt;
wobei die Leitung eine Längsachse und eine Öffnung im Inneren des Schlaufenreaktors aufweist, wobei sich die Öffnung näher zu der Außenwand des Schlaufenreaktors als zu der Innenwand des Schlaufenreaktors befindet;
mindestens ein Teil der Leitung entlang ihrer Längsachse im Inneren des Schlaufenreaktors gekrümmt ist; und
die Öffnung im Wesentlichen dem Strom der Suspension gegenüber steht,
und wobei das Verfahren den Schritt der Abgabe von polymeren Feststoffen aus dem Schlaufenreaktor über einen Abschnitt der Leitung umfasst, der sich aus dem Schlaufenreaktor nach außen erstreckt.

2. Das Verfahren nach Anspruch 1, wobei sich die Abgabeleitung in einem gekrümmten Abschnitt des Schlaufenreaktors, vorzugsweise einem Schenkel des Schlaufenreaktors befindet.

3. Das Verfahren nach Anspruch 2, wobei sich die Abgabeleitung in einem mittleren Abschnitt des gekrümmten Abschnitts des Schlaufenreaktors befindet und sich vorzugsweise im Wesentlichen an der Mitte des gekrümmten Abschnitts des Schlaufenreaktors befindet.

4. Das Verfahren nach Anspruch 2 oder Anspruch 3, wobei der gekrümmte Abschnitt eine Krümmung von 20 bis 270 Grad, vorzugsweise eine Krümmung von 80 bis 200 Grad und insbesondere eine Krümmung von 90 bis 180 Grad umfasst.

5. Das Verfahren nach einem der Ansprüche 2 bis 4, wobei der gekrümmte Abschnitt eine Krümmung von 180 Grad umfasst.

6. Das Verfahren nach Anspruch 1, wobei die Abgabeleitung entlang ihrer Längsachse von 45 Grad bis 135 Grad, vorzugsweise von 75 Grad bis 135 Grad gekrümmt ist.

7. Das Verfahren nach einem der Ansprüche 1 bis 5, wobei die Stirnfläche der Öffnung eine Ebene definiert, die eine Außenwand des Schlaufenreaktors an einer Tangente schneidet, die im Wesentlichen senkrecht zu der Ebene liegt.

8. Das Verfahren nach einem der Ansprüche 1 bis 3, wobei die Abgabeleitung einen Durchmesser aufweist, der 5-40 % des Innendurchmessers des Schlaufenreaktors, vorzugsweise 7-25 % des Innendurchmessers des Schlaufenreaktors und insbesondere 8-15 % des Innendurchmessers des Schlaufenreaktors beträgt.

9. Das Verfahren nach Anspruch 1, wobei sich die Öffnung näher an einer Außenwand des Schlaufenreaktors als zu der Mitte des Schlaufenreaktors befindet.

10. Das Verfahren nach Anspruch 9, wobei sich die Öffnung eng benachbart zu der Außenwand des Schlaufenreaktors befindet und vorzugsweise die Außenwand des Schlaufenreaktors berührt.

11. Das Verfahren nach Anspruch 1, wobei
sich die Abgabeleitung im Wesentlichen an der Mitte eines gekrümmten Abschnitts des Schlaufenreaktors befindet;
der gekrümmte Abschnitt des Schlaufenreaktors einen Schenkel des Schlaufenreaktors umfasst;
der gekrümmte Abschnitt des Schlaufenreaktors eine Krümmung von 180 Grad umfasst;
die Abgabeleitung entlang ihrer Längsachse mehr als etwa 75 Grad, jedoch weniger als etwa 135 Grad gekrümmt ist;
die Stirnfläche der Öffnung eine Ebene definiert, die eine Außenwand des Schlaufenreaktors an einer Tangente schneidet, die im Wesentlichen senkrecht zu der Ebene liegt;
die Abgabeleitung einen Durchmesser aufweist, der etwa 8-15 % des Innendurchmessers des Schlaufenreaktors beträgt; und
sich die Öffnung näher zu der Außenwand als zu der Mitte des Schlaufenreaktors befindet.

## Revendications

1. Procédé de capture d'un pourcentage en poids de matières solides de polymère à partir d'une bouillie circulante dans un réacteur à boucle supérieur au pourcentage en poids de matières solides de polymère dans la bouillie circulante, le procédé étant effectué dans un réacteur de polymérisation à boucle de bouillie qui contient un écoulement de bouillie de polymérisation dans celui-ci, et qui comprend :
- un conduit de décharge s'étendant sur une distance dans le réacteur à boucle ;
- le conduit ayant un axe longitudinal et une ouverture à l'intérieur du réacteur à boucle, l'ouverture étant située plus près de la paroi externe du réacteur à boucle que de la paroi interne du réacteur à boucle ;
- au moins une partie du conduit étant recourbée le long de son axe longitudinal à l'intérieur du réacteur à boucle ; et
- l'ouverture étant sensiblement tournée vers l'écoulement de la bouillie ;
- et le procédé comprenant l'étape de décharge de matières solides de polymère à partir du réacteur à boucle à travers une partie du conduit s'étendant vers l'extérieur à partir du réacteur à boucle.

2. Procédé selon la revendication 1, dans lequel le conduit de décharge est situé à l'intérieur d'une partie recourbée du réacteur à boucle, de préférence une branche inférieure du réacteur à boucle.

3. Procédé selon la revendication 2, dans lequel le conduit de décharge est situé à l'intérieur d'une partie médiane de la partie recourbée du réacteur à boucle et, de préférence, est situé sensiblement au milieu de la partie recourbée du réacteur à boucle.

4. Procédé selon la revendication 2 ou la revendication 3, dans lequel la partie recourbée comprend une courbe à 20 à 270 degrés, de préférence une courbe à 80 à 200 degrés et notamment une courbe à 90 à 180 degrés.

5. Procédé selon l'une quelconque des revendications 2 à 4, dans lequel la partie recourbée comprend une courbe à 180 degrés.

6. Procédé selon la revendication 1, dans lequel le conduit de décharge est recourbé le long de son axe longitudinal de 45 degrés à 135 degrés, de préférence de 75 degrés à 135 degrés.

7. Procédé selon l'une quelconque des revendications 1 à 5, dans lequel la face de l'ouverture définit un plan qui coupe une paroi externe du réacteur à boucle à une ligne tangente qui est sensiblement perpendiculaire au plan.

8. Procédé selon l'une quelconque des revendications 1 à 3, dans lequel le conduit de décharge a un diamètre qui représente 5-40 % du diamètre interne du réacteur à boucle, de préférence 7-25 % du diamètre interne du réacteur à boucle et notamment 8-15 % du diamètre interne du réacteur à boucle.

9. Procédé selon la revendication 1, dans lequel l'ouverture est située plus près d'une paroi externe du réacteur à boucle que du centre du réacteur à boucle.

10. Procédé selon la revendication 9, dans lequel l'ouverture est étroitement adjacente à la paroi externe du réacteur à boucle et, de préférence, touche la paroi externe du réacteur à boucle.

11. Procédé selon la revendication 1, dans lequel :
- le conduit de décharge est situé sensiblement au milieu d'une partie recourbée du réacteur à boucle ;
- la partie recourbée du réacteur à boucle comprend une branche inférieure du réacteur à boucle ;
- la partie recourbée du réacteur à boucle comprend une courbe à 180 degrés ;
- le conduit de décharge est recourbé le long de son axe longitudinal de plus d'environ 75 degrés mais de moins d'environ 135 degrés ;
- la face de l'ouverture définit un plan qui coupe une paroi externe du réacteur à boucle à une ligne tangente qui est sensiblement perpendiculaire au plan ;
- le conduit de décharge a un diamètre qui représente environ 8-15 % du diamètre interne du réacteur à boucle ; et
- l'ouverture est plus proche de la demi-paroi externe que de la ligne centrale du réacteur à boucle.
